# EUROPÄISCHE PATENTSCHRIFT

(11) **EP 1 911 342 B1**
(45) Veröffentlichungstag und Bekanntmachung des Hinweises auf die Patenterteilung: **01.09.2010**
(21) Anmeldenummer: 07117726.5
(22) Anmeldetag: 02.10.2007
(51) Int. Cl.: A01D 41/14

(54) **Höhenfühler für einen Erntevorsatz**
Height sensor for a header
Sonde de hauteur pour une tête de récolte

(30) Priorität: 11.10.2006 DE 102006048481
(43) Veröffentlichungstag der Anmeldung: 16.04.2008
(73) Patentinhaber: Maschinenfabrik Kemper GmbH & Co. KG, 48973 Stadtlohn (DE)
(72) Erfinder: Weitenberg, Klemens, 46325, Borken (DE); Rickert, Clemens, 48683 Ahaus (DE); Schulze Hockenbeck, Leo, 48351, Everswinkel (DE); Grobmeier, Jens, 48703, Stadtlohn (DE); Hüning, Martin, 48727, Billerbeck (DE)
(74) Vertreter: Holst, Sönke

(56) Entgegenhaltungen:
- EP-A- 1 155 607
- GB-A- 2 141 012
- US-A- 5 040 613
- US-A- 5 090 184
- US-B1- 6 553 925

## Beschreibung

Die Erfindung betrifft einen Höhenfühler für einen Erntevorsatz, mit einer quer zu einer Vorwärtsbewegungsrichtung des Erntevorsatzes angeordneten, drehbaren Welle, einem ersten Arm, der mit der Welle verbunden ist und sich bezüglich der Vorwärtsbewegungsrichtung des Erntevorsatzes von der Welle nach hinten und unten erstreckt, und einem zweiten Arm, der mit dem ersten Arm verbunden ist und sich bezüglich der Vorwärtsbewegungsrichtung des Erntevorsatzes vom ersten Arm nach hinten und unten erstreckt und im Betrieb Bodenkontakt aufweist.

### Stand der Technik

Landwirtschaftliche Mähdrescher können mit Steuereinrichtungen für die Höhe des Erntevorsatzes ausgestattet sein, die es ermöglichen, die Position des Erntevorsatzes relativ zum Erdboden zu steuern. Bodenkontakt aufweisende Höhenfühler können verwendet werden, um den Abstand von der Unterseite des Erntevorsatzes zum Erdboden zu messen. Diese Bodenkontakt aufweisenden Höhenfühler umfassen im Allgemeinen einen sich nach unten erstreckenden Arm, der den Boden unterhalb des Erntevorsatzes berührt. Wenn der Arm durch ein Hindernis nach oben abgelenkt wird, bewegt er eine mechanische Verbindung oder ein Potentiometer, das der selbsttätigen Höhensteuerung des Erntevorsatzes signalisiert, dass der Erntevorsatz anzuheben ist.

Bei einem Höhenfühler (US 6 523 333 B) ist ein J-förmiger, steifer Arm mit einer quer angeordneten, drehbaren Welle gekoppelt. Wenn der Arm ausgelenkt wird, dreht sich die Welle und verschiebt ein Potentiometer oder eine mechanische Verbindung. Es wurden auch Höhenfühler mit mehrteiligen Armen vorgeschlagen, bei denen die Elemente starr (US 6 883 299 B) oder um eine horizontale Achse schwenkbar (EP 1 155 607 A) miteinander verbunden sind. Bei einem anderen Höhenfühler (EP 0 331 893 A) bilden gebogene Federstahlbänder oder -bügel die Arme.

Bei den bekannten Höhenfühlern ist durch die Form der Arme der Auflagepunkt fest vorgegeben, an dem die Arme bei einer Sollhöhe des Erntevorsatzes über dem Erdboden auf dem Erdboden aufliegen. Bei unterschiedlichen Höhen des Erntevorsatzes wandert dieser Auflagepunkt abhängig von der Form der Arme mit sinkender Höhe nach hinten oder nach vorn oder bleibt etwa an derselben Stelle. Je weiter vorn der Auflagepunkt liegt, umso kleiner ist die Reaktionszeit der selbsttätigen Höhensteuerung des Emtevorsatzes. Es kann aber wünschenswert sein, den Auflagepunkt und somit die Reaktionszeit der selbsttätigen Höhensteuerung des Erntevorsatzes an die gewünschten Erntebedingungen und insbesondere an eine gewünschte Arbeitshöhe anzupassen, was bei den bekannten Höhenfühlern nicht möglich ist.

Ein anderer Nachteil der bekannten Höhenfühler wird darin gesehen, dass die Arme starr mit der Welle verbunden sind. Beim Fahren um Kurven oder beim Berühren von Hindernissen wirken seitliche Kräfte auf die Arme, die leicht zu Beschädigungen der Arme oder der Welle führen können.

### Aufgabe der Erfindung

Die der Erfindung zugrunde liegende Aufgabe wird darin gesehen, einen Bodenkontakt aufweisenden Höhenfühler bereitzustellen, der die beschriebenen Nachteile nicht oder in einem verminderten Ausmaß aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Höhenfühler für einen Erntevorsatz umfasst eine quer zur Vorwärtsbewegungsrichtung des Erntevorsatzes angeordnete, drehbare Welle und einen ersten Arm, der direkt oder indirekt (d. h. über dazwischen angeordnete Verbindungselemente) mit der Welle verbunden ist und sich von der Welle nach unten und entgegen der Vorwärtsbewegungsrichtung des Erntevorsatzes nach hinten erstreckt. Ein zweiter Arm, der im Betrieb Bodenkontakt aufweist, erstreckt sich vom ersten Arm nach unten und entgegen der Vorwärtsbewegungsrichtung des Erntevorsatzes nach hinten. Der erste Arm ist gegenüber dem zweiten Arm in seiner Längsrichtung verstellbar angebracht.

Auf diese Weise kann der zweite Arm in seiner Längsrichtung gegenüber dem ersten Arm verschoben werden, um den Auflagepunkt des zweiten Arms auf dem Erdboden variieren und den jeweiligen Erntebedingungen anpassen zu können.

In einer bevorzugten Ausführungsform ist der zweite Arm teleskopierbar am ersten Arm angebracht, d. h. der zweite (oder erste) Arm ist hohl und über den ersten (oder zweiten) Arm geschoben. Bei einem hohlen zweiten Arm wird auch ermöglicht, ein flexibles Zugmittel (z. B. Kette oder Seil) durch den zweiten Arm zu ziehen und mit dem ersten Arm zu verbinden. Ein sich radial erstreckender Bolzen kann dann den zweiten Arm mit dem Zugmittel verbinden und den zweiten Arm am ersten Arm arretieren. Das Zugmittel kann mit seinem verbleibenden, d. h. dem anderen, nicht mit dem ersten Arm verbundenen Ende am Erntevorsatz angebracht werden.

Zusätzlich wird vorgeschlagen, dass der Arm um eine sich vertikal erstreckende Achse schwenkbar mit der Welle verbunden ist. Dadurch kann der Arm eventuell wirkenden Seitenkräften problemlos ausweichen.

### Ausführungsbeispiel

In der Zeichnung ist ein nachfolgend näher beschriebenes Ausführungsbeispiel der Erfindung dargestellt. Es zeigt:
Fig. 1 eine seitliche Ansicht eines Erntevorsatzes mit einem Höhenfühler, und
Fig. 2 eine Draufsicht auf den Erntevorsatz aus Figur 1.

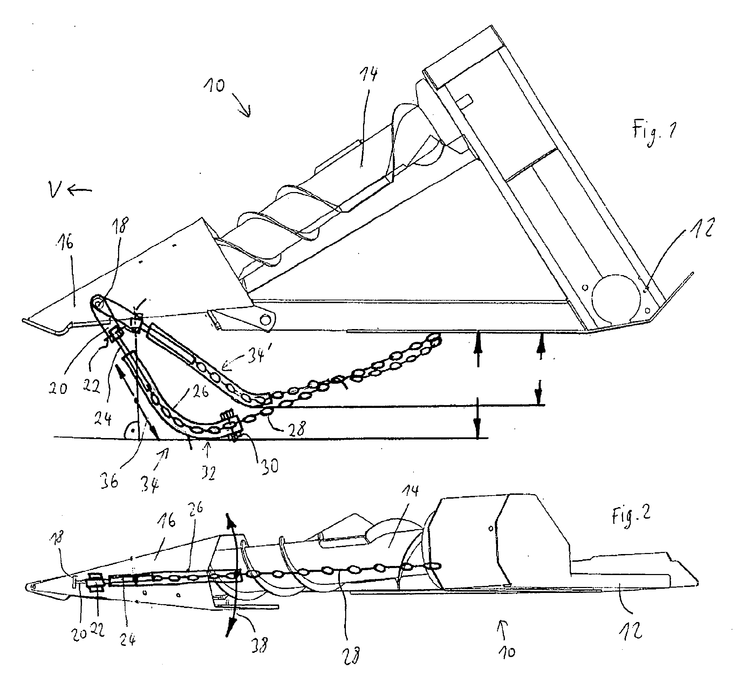

Die Figur 1 zeigt einen an sich bekannten Erntevorsatz 10, der in der vorliegenden Ausführungsform ein für den Erntebetrieb mit einem Mähdrescher oder Feldhäcksler geeigneter Maispflücker mit einem Rahmen 12 ist, an dessen in Vorwärtsbewegungsrichtung V linker Seite eine Stängelheberschnecke 14 angeordnet ist, welcher eine Teilerspitze 16 vorgelagert ist. Die vorliegende Erfindung kann an beliebigen anderen Typen von Erntevorsätzen verwendet werden, wie Schneidwerken für Mähdrescher und Maismähvorsätzen für Feldhäcksler.

An der Innenseite der Teilerspitze 16 ist eine Welle 18 drehbar gelagert, die um eine quer zur Vorwärtsrichtung V und horizontal verlaufende Achse drehbar ist. Mit der Welle 18 ist ein Sensor (nicht gezeigt) zur Erfassung der Drehstellung der Welle 18 verbunden, um einer Steuereinrichtung für die Höhe des Erntevorsatzes 10 ein elektrisches Signal zuzuführen, das eine Information über den Abstand des Erntevorsatzes 10 zum Erdboden beinhaltet. Außerdem ist die Welle 18 fest mit einer Verbindungsstrebe 20 gekoppelt, die sich von der Welle 18 schräg nach hinten und unten erstreckt.

Am unteren Ende der Verbindungsstrebe 20 ist eine Schwenklagerung 22 angeordnet, die eine sich quer zur Längsachse der Verbindungsstrebe 20 erstreckende Schwenkachse definiert. Die Schwenkachse der Schwenklagerung 22 verläuft somit schräg nach hinten und oben. Durch die Schwenklagerung 22 ist ein erster Arm 24 um die Schwenkachse der Schwenklagerung 22 schwenkbar mit der Verbindungsstrebe 20 verbunden. Der erste Arm 24 erstreckt sich koaxial zur Verbindungsstrebe 20 nach hinten und unten und ist in sich starr und gerade.

Ein zweiter, in sich starrer Arm 26 ist J-förmig gestaltet und weist einen oberen, geraden Abschnitt und einen unteren, kreisbogenförmig nach oben gekrümmten Abschnitt auf. Da der zweite Arm 26 hohl ist, kann sein oberer Abschnitt auf den ersten Arm 24 aufgesteckt und entlang der Längsachse des ersten Arms 24 verschoben werden. Ein flexibles Verbindungsmittel 28 in Form einer Kette ist an seinem ersten Ende mit dem ersten Arm 24 und an seinem zweiten Ende mit der Unterseite des Rahmens 12 des Erntevorsatzes 10 verbunden. Ein mit einer Mutter gesicherter Bolzen 30 erstreckt sich am rückwärtigen Ende des zweiten Arms 26 radial durch letzteren und durch ein Glied des flexiblen Zugmittels 30 hindurch.

Die Arme 24, 26 bilden mit der Welle 18 und dem flexiblen Zugmittel 30 einen Höhenfühler 34, welcher geeignet ist, einer Steuereinrichtung für die Höhe des Erntevorsatzes 10 ein elektrisches Signal zuzuführen, das eine Information über den Abstand des Erntevorsatzes 10 zum Erdboden beinhaltet.

Im Betrieb liegt der gekrümmte Abschnitt des zweiten Arms 26 auf dem Erdboden auf. Der Schwenkwinkel der Welle 18 hängt von der Höhe des Erntevorsatzes 10 über dem Erdboden ab. Die teleskopierbare Anordnung des zweiten Arms 26 auf dem ersten Arm 24 ermöglicht es, nach dem Lösen und Abnehmen des Bolzens 30, den zweiten Arm 26 gegenüber dem ersten Arm 24 zu verschieben, um die Lage des Auflagepunktes 32 des zweiten Arms 26 auf dem Erdboden (und somit die Reaktionszeit der selbsttätigen Höhensteuerung des Erntevorsatzes 10) an die jeweils gewünschten Erntebedingungen, insbesondere an die Arbeitshöhe anzupassen. Anschließend wird der Bolzen 30 wieder fixiert, um den zweiten Arm 26 gegenüber dem ersten Arm 24 festzulegen. Es ist somit möglich, den zweiten Arm 26 in Richtung des Pfeils 36 zu verschieben, und den zweiten Arm 26 z. B. in die nach oben verschobene Stellung zu verbringen, in welcher der Höhenfühler in der Figur 1 mit dem Bezugszeichen 34' gekennzeichnet ist. Das flexible Zugmittel 28 wird an seinem rückwärtigen Ende in einer derartigen Position mit dem Rahmen 12 verbunden, dass es auch dann entspannt ist, wenn der Erntevorsatz 10 etwas höher als in der vorgesehenen Arbeitshöhe positioniert ist.

Das Schwenklager 22 ermöglicht es den Armen 24, 26 eventuellen Seitenkräften in Richtung des Pfeils 38 (s. Figur 2) seitlich auszuweichen. Wenn der Höhenfühler 34 an einem Seitenteil des Erntevorsatzes 10 angebracht ist, welches um 90° oder 180° in eine nach oben verschwenkte Transportstellung verschwenkbar ist, legen sich die Arme 24, 26 in der Transportstellung selbsttätig flach auf den Rahmen 12.

## Patentansprüche

1. Höhenfühler (34) für einen Erntevorsatz (10), mit einer quer zu einer Vorwärtsbewegungsrichtung (V) des Erntevorsatzes (10) angeordneten, drehbaren Welle (18), einem ersten Arm (24), der mit der Welle (18) verbunden ist und sich bezüglich der Vorwärtsbewegungsrichtung (V) des Erntevorsatzes (10) von der Welle (18) nach hinten und unten erstreckt, und einem zweiten Arm (26), der mit dem ersten Arm (24) verbunden ist und sich bezüglich der Vorwärtsbewegungsrichtung (V) des Erntevorsatzes (10) vom ersten Arm (24) nach hinten und unten erstreckt und im Betrieb Bodenkontakt aufweist, **dadurch gekennzeichnet, dass** der zweite Arm (26) in seiner Längsrichtung gegenüber dem ersten Arm (24) verstellbar angebracht ist.

2. Höhenfühler (34) nach Anspruch 1, **dadurch gekennzeichnet, dass** die Arme (24, 26) gegeneinander teleskopierbar sind.

3. Höhenfühler (34) nach Anspruch 2, **dadurch gekennzeichnet, dass** der zweite Arm (26) hohl ist, dass ein flexibles Zugmittel (28) sich durch den zweiten Arm (26) erstreckt und mit dem ersten Arm (24) verbunden ist, und dass der zweite Arm (26) durch einen sich radial erstreckenden Bolzen (30) mit dem flexiblen Zugmittel (28) verbunden ist.

4. Höhenfühler (34) nach Anspruch 3, **dadurch gekennzeichnet, dass** das Zugmittel (28) mit seinem verbleibenden Ende am Erntevorsatz (10) anbringbar ist.

5. Höhenfühler (34) nach einem der Ansprüche 1 bis 4, **dadurch gekennzeichnet, dass** der zweite Arm (26) nach oben gekrümmt ist.

6. Höhenfühler (34) nach einem der Ansprüche 1 bis 5, **dadurch gekennzeichnet, dass** der erste Arm (24) um eine sich vertikal erstreckende Achse schwenkbar mit der Welle (18) verbunden ist.

7. Höhenfühler (34) nach einem der vorhergehenden Ansprüche, **dadurch gekennzeichnet, dass** der erste Arm (24) und/oder der zweite Arm (26) in sich starr sind.

## Claims

1. Height sensor (34) for a header (10), having a rotatable shaft (18) which is arranged transversely with respect to a direction of forward motion (V) of the header (10), having a first arm (24) which is connected to the shaft (18) and extends rearwardly and downwardly from the shaft (18) with respect to the direction of forward motion (V) of the header (10), and having a second arm (26) which is connected to the first arm (24) and extends rearwardly and downwardly from the first arm (24) with respect to the direction of forward motion (V) of the header (10) and makes contact with the ground during operation, **characterized in that** the second arm (26) is mounted such that it can be adjusted in its longitudinal direction in relation to the first arm (24).

2. Height sensor (34) according to Claim 1, **characterized in that** the arms (24, 26) are mutually telescopic.

3. Height sensor (34) according to Claim 2, **characterized in that** the second arm (26) is hollow, **in that** a flexible pulling means (28) extends through the second arm (26) and is connected to the first arm (24), and **in that** the second arm (26) is connected to the flexible pulling means (28) by a radially extending bolt (30).

4. Height sensor (34) according to Claim 3, **characterized in that** the pulling means (28) can be mounted on the header (10) by way of its remaining end.

5. Height sensor (34) according to one of Claims 1 to 4, **characterized in that** the second arm (26) is curved upwards.

6. Height sensor (34) according to one of Claims 1 to 5, **characterized in that** the first arm (24) is connected to the shaft (18) such that it can pivot about a vertically extending axis.

7. Height sensor (34) according to one of the preceding claims, **characterized in that** the first arm (24) and/or the second arm (26) are/is inherently rigid.

## Revendications

1. Sonde de hauteur (34) pour une tête de récolte (10), comprenant un arbre rotatif (18) disposé transversalement à une direction d'avance (V) de la tête de récolte (10), un premier bras (24), qui est connecté à l'arbre (18) et s'étend par rapport à la direction d'avance (V) de la tête de récolte (10) depuis l'arbre (18) vers l'arrière et vers le bas, et un deuxième bras (26) qui est connecté au premier bras (24) et qui s'étend par rapport à la direction d'avance (V) de la tête de récolte (10) depuis le premier bras (24) vers l'arrière et vers le bas, et qui présente pendant le fonctionnement un contact au sol, **caractérisée en ce que** le deuxième bras (26) est monté de manière réglable dans sa direction longitudinale par rapport au premier bras (24).

2. Sonde de hauteur (34) selon la revendication 1, **caractérisée en ce que** les bras (24, 26) peuvent être télescopés l'un contre l'autre.

3. Sonde de hauteur (34) selon la revendication 2, **caractérisée en ce que** le deuxième bras (26) est creux, **en ce qu'**un moyen de traction flexible (28) s'étend à travers le deuxième bras (26) et est connecté au premier bras (24), et **en ce que** le deuxième bras (26) est connecté au moyen de traction flexible (28) par un boulon (30) s'étendant radialement.

4. Sonde de hauteur (34) selon la revendication 3, **caractérisée en ce que** le moyen de traction (28) peut être amené contre la tête de récolte (10) avec son extrémité restante.

5. Sonde de hauteur (34) selon l'une quelconque des revendications 1 à 4, **caractérisée en ce que** le deuxième bras (26) est courbé vers le haut.

6. Sonde de hauteur (34) selon l'une quelconque des revendications 1 à 5, **caractérisée en ce que** le premier bras (24) est connecté à l'arbre (18) de manière à pouvoir pivoter autour d'un axe s'étendant verticalement.

7. Sonde de hauteur (34) selon l'une quelconque des revendications précédentes, **caractérisée en ce que** le premier bras (24) et/ou le deuxième bras (26) sont rigides en soi.
